# EUROPÄISCHE PATENTSCHRIFT

(11) **EP 1 180 219 B1**
(45) Veröffentlichungstag und Bekanntmachung des Hinweises auf die Patenterteilung: **29.09.2004**
(21) Anmeldenummer: 00927214.7
(22) Anmeldetag: 17.05.2000
(51) Int. Cl.: F16B 25/00, F16B 13/14

(54) **VERFAHREN ZUM EINDREHEN EINER GEWINDESCHNEIDENDEN SCHRAUBE IN EIN BOHRLOCH**
METHOD FOR SCREWING A THREAD-CUTTING SCREW INTO A DRILLED HOLE
PROCEDE DE VISSAGE D'UNE VIS FILETANTE DANS UN TROU

(30) Priorität: 26.05.1999 DE 19924007; 17.09.1999 DE 19944602
(43) Veröffentlichungstag der Anmeldung: 20.02.2002
(73) Patentinhaber: TOGE-Dübel A. Gerhard KG, 90431 Nürnberg (DE)
(72) Erfinder: GERHARD, Anton, D-90427 Nürnberg (DE)
(74) Vertreter: Rau, Manfred, Dr. Dipl.-Ing.
(86) Internationale Anmeldenummer: PCT/EP2000/004448
(87) Internationale Veröffentlichungsnummer: WO 2000/073671

(56) Entgegenhaltungen:
- EP-A- 0 916 030
- US-A- 2 690 879
- US-A- 3 897 713
- US-A- 4 098 166

## Beschreibung

Die Erfindung betrifft ein Verfahren nach dem Oberbegriff des Anspruches 1.

Zum Einschrauben in festes, aber in gewissem Umfang poröses Material, insbesondere in Beton, geeignete gewindeschneidende Schrauben, sogenannte Beton-Schrauben, sind vielfältig bekannt, beispielsweise aus EP 0 916 030 A und EP 0905 389 A. Derartige Schrauben können aus korrosionsfestem Stahl bestehen, wenn dies aus Gründen des Korrosionsschutzes gefordert wird. Insbesondere Beton weist Armierungen auf, die ausschließlich aus nichtkorrosionsfestem Stahl bestehen. Wenn die die erwähnten Schrauben aufnehmenden Bohrlöcher bis in die Nähe von Armierungen gebohrt werden, dann ist die Gefahr nicht völlig auszuschließen, daß über das Bohrloch Feuchtigkeit bis zu den Armierungsstählen des Betons gelangt mit der Folge, daß diese korrodieren können.

Aus der EP 0 199 671 B1 ist es bekannt, zur Befestigung von Ankerstangen in Bohrlöchern Patronen einzusetzen, die 2-Komponentensysteme auf Acrylatharzbasis enthalten. Der Einsatz derartiger Patronen ist aus dem Prospekt W 2285 1198 20-d 9 aus dem Jahre 1998 der Hilti Deutschland GmbH mit dem Titel "Verbundankersystem HILTI HVZ" bekannt. Hier wird die die Komponenten enthaltende Patrone in ein Bohrloch eingesetzt und anschließend eine Ankerstange, deren Außendurchmesser kleiner ist als der Durchmesser des Bohrlochs, in das zuvor vom Bohrmehl durch Ausblasen befreite Bohrloch eingeschoben. Danach wird die Ankerstange unter Schlag-Drehen in das Bohrloch eingeschoben. Hierbei wird die Patrone zerstört und deren Inhalt vermischt und im Bohrloch verteilt. Anschließend erfolgt ein Aushärten. Während dieser Zeit darf naturgemäß die Ankerstange nicht berührt werden, da sie keine eigene Festigkeit bzw. Halterung im Bohrloch aufweist. Wenn das Schlag-Drehen über das Einschieben hinaus erfolgt, besteht die Gefahr, daß das Abdichtmittel aus dem Bohrloch heraus gefördert wird.

Aus dem Fach "Befestigungstechnik" von Eligehausen, Mallée und Rehm, Sonderdruck aus dem Beton-Kalender 1997, Verlag Ernst & Sohn, Seiten 8 und 9, ist es bekannt, sogenannte Verbunddübel zu setzen, indem Kunstharz-Bindemittel in Form einer Glaspatrone oder eines Kunststoffschlauches in ein Bohrloch eingegeben werden.

Aus der US 2,690,879 A ist es bekannt, Schrauben in Holz, und zwar insbesondere in Eisenbahnschwellen, zu schrauben. Um die Verbindung besonders fest zu machen, wird in die Bohrung eine Kapsel geschoben, die zwei Kammern aufweist. In einer Kammer befindet sich ein Kunstharz und in der anderen Kammer ein Härter. Das Kunstharz füllt nicht nur die freien Räume der Bohrung, sondern härtet auch das Holz im Haltebereich der Schraube.

Aus der US 3,897,7 13 A ist es bekannt, eine in ein Werkstück, beispielsweise aus Kunststoff, einzudrehende Schraube mit einem Heißkleber zu beschichten, um eine feste Verbindung zu erreichen. An dem Einführende der Schraube ist eine Schneid-Ausnehmung mit einer Schneidkante vorgesehen, um das Einschneiden der Schraube in das Werkstück zu erleichtern. Irgendwelchen Einfluß auf den Heißkleber hat diese Schneid-Ausnehmung nicht.

Der Erfindung liegt die Aufgabe zugrunde, ein Verfahren der gattungsgemäßen Art so weiterzubilden, daß eine zuverlässige Abdichtung des gesamten Bohrloches und des umgebenden Materials erreicht wird.

Diese Aufgabe wird erfindungsgemäß durch die Merkmale im Kennzeichnungsteil des Anspruches 1 gelöst. Durch den hohen Druck, der beim Einschrauben der Schraube auf das Abdichtmittel ausgeübt wird, wird dieses durch den im Gewindegang ausgebildeten Kanal gepreßt und wegen des hohen Druckes radial nach außen in den umgebenden Beton gedrückt.

Hierdurch wird eine außerordentlich intensive und dauerhafte Abdichtung herbeigeführt. Auch reine Abdichtmittel, wie Silikonkautschuk, üben eine so große Reibungskraft auf die Schraube aus, daß diese auch bei Wechselbeanspruchungen gegen Rückdrehen ausreichend gesichert ist. Außer reinen Abdichtmitteln können naturgemäß auch die üblichen bekannten Bindemittel eingesetzt werden, die gleichzeitig abdichtend wirken, nämlich die geeigneten Kunstharze. Ein unbeabsichtigtes Herausfördern des Abdichtmittels aus dem Bohrloch kann nicht stattfinden, da die Schraube nur bis auf den Bohrloch-Grund geschraubt, aber darüber hinaus nicht gedreht werden kann. Weitere vorteilhafte Ausgestaltungen ergeben sich aus den Unteransprüchen 2 bis 4.

Weitere Merkmale, Vorteile und Einzelheiten der Erfindung ergeben sich aus der nachfolgenden Beschreibung eines Ausführungsbeispiels anhand der Zeichnung. Es zeigt:
- Fig.: 1 eine gewindeschneidende Schraube zu Beginn des Einschraubens in ein Bohrloch,
- Fig. 2: die Schraube kurz vor Abschluß des Einschraubens in das Bohrloch,
- Fig. 3: einen Querschnitt durch die Schraube,
- Fig. 4: eine Teilansicht einer gewindeschneidenden Schraube im Bereich ihres Einführendes in einer gegenüber den Fig. 1 bis 2 abgewandelten Ausführungsform und
- Fig. 5: eine Stirnansicht der Schraube gemäß dem Sichtpfeil V in Fig. 4.

Die in der Zeichnung dargestellte Schraube 1 weist einen zylindrischen Kern 2 auf, der im Bereich des Einführendes 3 der Schraube 1 angefast sein kann. Am entgegengesetzten Ende des Kerns 2 ist ein beliebig ausgebildeter Schraubenkopf 4 vorgesehen. Auf dem Kern 1 ist ein stegartig ausgebildetes Gewinde 5 ausgeformt, dessen Außendurchmesser D 1,0 bis 2,5 mm größer ist als der Nenndurchmesser Dn eines Bohrloches 6, in das die Schraube 1 eingesetzt werden soll. Der Nenndurclunesser Dn eines Bohrloches 6 ist international genormt, beträgt also 4, 5, 6, 8, 10, 12, 14, 16, ... mm. Das Bohrloch 6 ist in festes Material, nämlich Beton 7, eingebracht.

Der Kern 2 weist entlang eines Abschnitts 8, der sich vom Einführende 3 über einen Teil der Länge des Gewindes 5 erstreckt, drei Aufnahme-Nuten 9 mit rechteckigem Querschnitt und größerer Tiefe a als Breite b auf. Diese Nuten 9 verlaufen im wesentlichen parallel zur Mittel-Längs-Achse 10 der Schraube 1 und sind radial nach außen offen. Jeweils benachbarte Aufnahme-Nuten 9 sind in gleichen Winkelabständen c von 120° angeordnet. Der Kern 2 mit Schraubenkopf 4 und Gewinde 5 sind einteilig aus einem korrosionfesten Stahl, insbesondere VA-Stahl, ausgebildet.

Die Schraube 1 weist entsprechend der Zahl der Aufnahme-Nuten 9 Schneid-Elemente 11 mit jeweils einer Schneid-Einsatz-Leiste 12 auf, die im wesentlichen entlang der Einschraub-Drehrichtung 13 der Schraube 1 formschlüssig und kippstabil in jeweils einer Aufnahme-Nut 9 gehalten ist. Der Querschnitt der Schneid-Einsatz-Leiste 12 ist dem Querschnitt der Aufnahme-Nut 9 angepaßt. Sie ist in radialer Richtung durch Reibschluß oder durch Einkleben in der Aufnahme-Nut 9 gehalten. Radial von der Mittel-Längs-Achse 10 nach außen abstehend sind einteilig mit der Schneid-Einsatz-Leiste 12 ausgebildete Schneidköpfe 14 vorgesehen, die jeweils im Gewinde 5 angeordnet sind. Die Schneidköpfe 14 weisen eine jeweils in Einschraub-Drehrichtung 13 vornliegende Schneidkante 15 auf. Die Schneid-Einsatz-Leiste 12 und die Schneidköpfe 14 bestehen in der Regel aus einem gehärteten nichtkorrosionsfesten Stahl.

Die Höhe e der Schneidköpfe 14 ist - bezogen auf den Außenumfang des Kernes 2 - derart gewählt, daß die Schneidköpfe 14 gegenüber dem Außenumfang des Gewindes 5 um ungefähr 0,05 bis 0,4 mm, insbesondere 0,1 bis 0,2 mm, überstehen. Die Tiefe a der Aufnahme-Nut 9 ist in Bezug auf den Durchmesser d des Kerns 2 derart gewählt, daß die jeweiligen Nut-Grunde der Aufnahme-Nuten 9 ausreichend voneinander beabstandet sind, so daß die Gesamtstabilität des Kerns 2 durch die Nuten nicht beeinträchtigt wird. Die Länge f des Abschnitts 8 ist derart gewählt, daß sich die Schneid-Einsatz-Leiste 12 über etwa drei Gewindegänge erstreckt und somit drei Schneidköpfe 14 aufweist.

Weitere Einzelheiten der Ausgestaltung der Schraube 1 ergeben sich aus der deutschen Patentanmeldung 198 52 338.6, auf die insoweit ausdrücklich verwiesen wird.

Beim Eindrehen der Schraube 1 in das Bohrloch 6 kommen die Schneidkanten 15 der Schneidköpfe 14 in schneidenden Eingriff mit der Wand 16 des Bohrlochs. Sie schneiden eine gewindeartige Nut in den Beton 7, in dem die Schraube 1 befestigt werden soll. Das im Vergleich zu den Sahneidköpfen 14 weiche Gewinde 5 verformt sich beim Einschrauben geringfügig und wird an dem Beton 7 abgerieben. Aufgrund der größeren Härte der Schneidköpfe 14 ist deren Abnutzung erheblich geringer, so daß ihre Schneidwirkung bis zum vollständigen Einschrauben der Schraube 1 in das Bohrloch 6 erhalten bleibt.

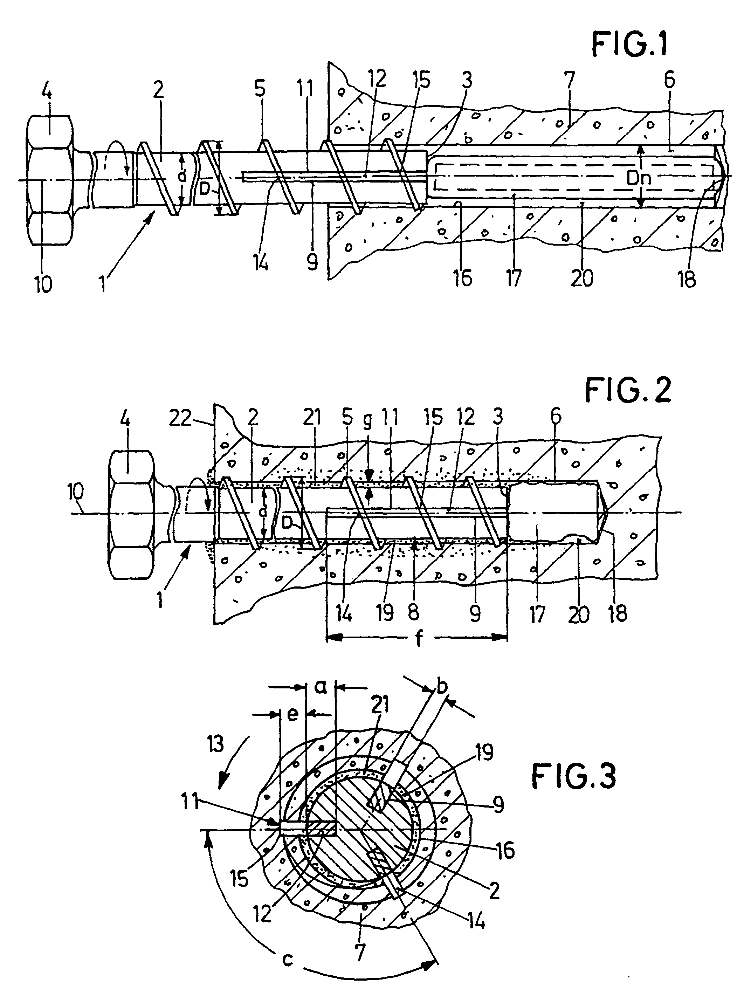

Um eine vollständige Abdichtung des Bohrlochs 6 gegenüber dem es umgebenden Beton 7 zu erreichen, und zwar um insbesondere eine Abdichtung von zum Bohrloch 6 benachbarten Armierungen aus nichtrostfreiem Stahl zu erreichen, wird der Beton 7 in der Umgebung des Bohrlochs 6 unter hohem Druck mit einem Abdichtmittel 19 imprägniert. Hierzu wird eine Patrone 17, die aus Glas, bevorzugt aber aus einer Folie besteht und die ein geeignetes Abdichtmittel 19 enthält, vor dem Einsetzen der Schraube 1 in das Bohrloch 6 in dieses hinein geschoben. Nach einem Teil-Einschrauben der Schraube 1 in das Bohrloch 6. wie es etwa in Fig. 1 dargestellt ist, wird die Patrone 17 zwischen dem Bohrlochgrund 18 und dem Einführ-Ende 3 der Schraube 1 zusammengedrückt und zerstört. Das in ihr enthaltene, durch Punkte dargestellte Abdichtmittel 19 wird in dem Bereich 20 des Bohrlochs 6 zwischen Einführ-Ende 3 und Bohrlochgrund 18 beim zunehmenden Einschrauben der Schraube 1 in das Bohrloch 6 komprimiert und unter Druck gesetzt. Es wandert durch den engen Kanal 21, der zwischen dem Gewinde 5 einerseits und dem Kern 2 und der Bohrlochwand 16 andererseits ausgebildet wird, in Richtung zum Schraubenkopf 4. Da dieser Kanal aufgrund der geschilderten Größenverhältnisse sehr eng ist, und er zu einem nicht unerheblichen Teil mit beim Einschrauben zermahlenem Material 7 gefüllt ist, bildet er einen hohen Strömungswiderstand, d. h. es baut sich ein erheblicher Druck in dem verbleibenden Bereich 20 und dem Kanal 21 auf. Dies hat zur Konsequenz, daß das Abdichtmittel 19, das fließfähig ist, in das Material 7 gepreßt wird und den Bereich um das Bohrloch 6 imprägniert. Es erfolgt also eine Druckirnprägnierung. Die radiale Weite g des Kanals 21 beträgt 0,4 bis 0,7mm und bevorzugt etwa 0,5mm.

Wenn entsprechend der Darstellung in Fig. 2 die Schraube 1 zu mehr als ¾ in das Bohrloch 6 eingeschraubt ist, dann ist der Kanal 21 bereits bis in die Nähe der dem Schraubenkopf 4 zugewandten Außenseite 22 des Betons 7 gefüllt. Die Menge des in der Patrone 17 befindlichen Abdichtmittels 19 wird auf jeden Fall so gewählt, daß nach dem vollständigen Einschrauben der Schraube 1 in das Bohrloch 6 Abdichtmittel 19 zwischen der Außenseite 22 und dem Schraubenkopf 4 aus dem Bohrloch 6 gepreßt wird. Das Einschrauben der Schraube 1 in das Bohrloch 6 erfolgt mittels einer einfachen stetigen oder in Drehrichtung pulsierender Dreh- bzw. Schraubbewegung, also mittels einer sogenannten Ratsche oder mittels eines Schlagschraubers und nicht mittels eines axial wirkenden Hammerbohrers oder dergleichen, der außer einem Drehmoment noch eine pulsierende Kraft in Richtung der Achse 10 ausübt. Die Tiefe des Bohrlochs 6 wird der Einschraubtiefe angepaßt, beispielsweise durch bekanntes Anschlagbohren. Durch die Abstimmung der Tiefe des Bohrlochs 6 auf die durch den Schraubenkopf 4 festgelegte maximale Einschraubtiefe wird sichergestellt, daß in allen Bereichen der Schraube 1 und des Bohrlochgrundes 18 ausreichend Abdichtmittel 19 vorhanden ist.

Als Abdichtmittel 19 können in der üblichen Weise Kunstharz-Bindemittel, nämlich ungesättigte Polyester, Vinylester, Epoxydharz mit geeignetem Härter, insbesondere Silikonkautschuk aber auch Wasserglas verwendet werden.

Anstelle der geschilderten gewindeschneidenden Schraube, bei der es sich um eine sogenannte Beton-Schraube handelt, können auch andere für den gleichen Einsatz weitbekannte Schrauben verwendet werden, wie sie beispielsweise aus EP 0 933 539 A, EP 0 930 438 A, EP 0 930 437 A, EP 0 916 030 A und EP 0 905 389 A bekannt sind.

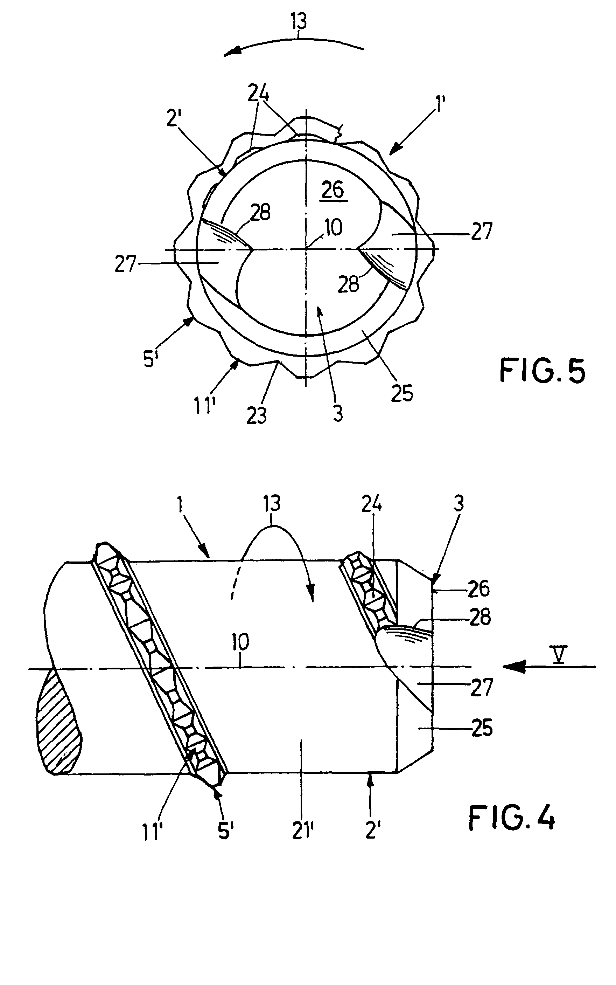

In den Fig. 4,und 5 ist eine sogenannte Beton-Schraube 1 teilweise dargestellt, wie sie aus den EP 0 0933 539 A, EP 0 930 438 A und EP 0 930 437 A bekannt ist. Sie weist ein Gewinde 5' auf, das im Bereich des Einführendes 3 über etwa zwei bis drei Gewindegänge mit Schneidelementen 11' versehen ist, die durch im Gewinde ausgebildete Schneidkerben 23 gebildet werden. Die Ausgestaltung dieser Schneidkerben 23 ist aus den vorerwähnten Veröffentlichungen bekannt. Wie insbesondere Fig. 5 erkennen läßt, weist das Gewinde 5' am Einführende 3 einen sich etwa über einen halben Gewindegang erstreckenden Gewinde-Abschnitt 24 auf, der vom Kern 2' kommend bis zur normalen Höhe des Gewindeganges ansteigt. Auch dies ist aus den vorerwähnten Veröffentlichungen bekannt.

Am Einführende 3 ist am ansonsten zylindrischen Kern 2' eine Fase 25 ausgebildet. Desweiteren sind am Einführende 3 in der Stirnseite 26 des Kerns 2' ausgebildete Schneid-Ausnehmungen 27 mit sich in die Stirnseite 26 hinein erstreckenden Schneiden 28 angeordnet. Die Schneiden 28 sind, wie den Fig. 4 und 5 entnehmbar ist, bezogen auf die Einschraub-Drehrichtung 13 derart angestellt, daß sie einen von innen, also von der Achse 10 her nach außen ziehenden Schnitt ausüben. Die - bezogen auf die Drehrichtung 13 - vor den Schneiden 28 liegenden Ausnehmungen 27 münden in den der Stirnseite 26 unmittelbar benachbarten Kanal 21'. In Richtung zur Achse 10 erstrecken sie sich über die Fase 25 hinaus.

Beim Einschrauben der Schraube 1' in ein Bohrloch 6, wie es beispielsweise in den Fig. 1 bis 3 dargestellt ist, trifft zuerst die Stirnseite 26 der Schraube 1' auf die Patrone 17. Die Schneiden 28 zerstören die Patrone 17 und bewirken eine intensive Mischung des im Bohrloch 6 vorhandenen Bohrmehls mit dem Inhalt der Patrone 17. Durch die Schneid-Ausnehmungen 27 wird das Gemisch aus Bohrmehl und Abdichtmittel 19 und Teilstücken der Patrone 17 leichter in den unmittelbar benachbarten Kanal 21' gefördert, wobei die Fase 25 diese Anfangsförderung in den Kanal 21' unterstützt. Die oben geschilderte Kompression bleibt auch hierbei erhalten.

## Patentansprüche

1. Verfahren zum Eindrehen einer gewindeschneidenden Schraube (1) in ein einen Bohrlochgrund (18) und eine Bohrlochwand (16) aufweisendes Bohrloch (6) in einem festen aber porösen Material (7), nämlich in Beton, unter Verwendung einer Schraube (1) mit einem auf einem Kern (2) ausgebildeten Gewinde (5), dem Schneidkanten (15) zum Schneiden einer schraubenlinienförmigen, das Gewinde (5) aufnehmenden Nut in den Beton zugeordnet sind, und mit einem zwischen dem Gewinde (5) ausgebildeten Gewinde-Gang, wobei die Schraube (1) mit ihrem Einführ-Ende in das Bohrloch (6) eingeführt und unter Schneiden der das Gewinde aufnehmenden Nut in den Beton eingeschraubt wird,
**dadurch gekennzeichnet,**
**daß** eine Patrone (17) mit einem Abdichtmittel (19) in das Bohrloch (6) geschoben wird,
**daß** anschließend die Schraube (1) mit ihrem Einführ-Ende in das Bohrloch (6) eingerührt und in den Beton eingeschraubt wird,
**daß** die Patrone (17) in einem Bereich (20) zwischen dem Einführ-Ende (3) und dem Bohrlochgrund (18) zerdrückt wird,
**daß** das Abdichtmittel (19) in dem Bereich (20) komprimiert wird und
**daß** das Abdichtmittel (19) unter Vermischung mit im Bohrloch (6) vorhandenem Bohrmehl unter Druck in einen engen Kanal (21) mit einer Weite (g) von 0,4 mm bis 0,7 mm zwischen dem Gewinde (5), dem Kern (2) und der Bohrlochwand (16) einströmt und in den Beton gedrückt wird.

2. Verfahren nach Anspruch 1, **dadurch gekennzeichnet,**
**daß** der Kanal (21) mit einer Weite (g) von bevorzugt 0,5 mm ausgebildet wird.

3. Verfahren nach einem der Ansprüche 1 oder 2, **dadurch gekennzeichnet,**
**daß** als Abdichtmittel (19) Silikonkautschuk oder Kunstharz-Bindemittel oder Wasserglas eingesetzt wird.

4. Verfahren nach einem der Ansprüche 1 bis 3, **dadurch gekennzeichnet,**
**daß** die Patrone (17) aus einer Folie besteht.

## Claims

1. Method for driving a self-tapping screw (1) into a drilled hole (6) comprising a base (18) of a drilled hole and a wall (16) of a drilled hole in a solid but porous material (7), namely in concrete, by using a screw (1) with a thread (5) constructed on a core (2), to which the cutting edges (15) for cutting a screw-line-shaped groove in the concrete receiving the thread (5) are associated and with a thread flight constructed between the thread (5), the screw (1) being inserted with its insertion end into the drilled hole (6) and screwed into the concrete by cutting the groove receiving the thread, **characterised in that** a cartridge (17) with a sealing agent (19) is pushed into the drilled hole (6), that subsequently the screw (1) is inserted into the drilled hole (6) with its insertion end and screwed into the concrete, that the cartridge (17) is crushed in a region (20) between the insertion end (3) and the base (18) of the drilled hole, that the sealing agent (19) is compromised in the region (20) and that by mixing with the bore dust present in the drilled hole (6) the sealing agent (19) flows under pressure into a narrow channel (21) with a width (g) of 0.4 to 0.7 mm between the thread (5), the core (2) and the wall (16) of the drilled hole and is pressed into the concrete.

2. Method according to claim 1, **characterised in that** the channel (21) is constructed with a width (g) of preferably 0.5 mm.

3. Method according to any one of claims 1 or 2, **characterised in that** silicone rubber or synthetic resin binders or water glass is used as a sealing agent (19).

4. Method according to any one of claims 1 to 3, **characterised in that** the cartridge (17) consists of a foil.

## Revendications

1. Procédé de vissage d'une vis filetante (1) dans une forure (6) comprenant un fond de forure (18) et une paroi de forure (16) dans un matériau (7) solide mais poreux, à savoir dans du béton, en utilisant une vis (1) comprenant un filet (5) conçu sur un noyau (2), filet auquel sont associées des arêtes de taillage (15) pour tailler dans le béton un écrou de forme hélicoïdale, recevant le filet (5), et comprenant un pas de filet conçu entre le filet (5), la vis (1) étant introduite avec son extrémité d'introduction dans la forure (6) et sous l'effet du taillage de l'écrou recevant le filet, étant vissée dans le béton,
**caractérisé**
**en ce qu'**une cartouche (17) comprenant des moyens d'étanchéité (19) est poussée dans la forure (6),
**en ce qu'**ensuite, la vis (1) est introduite avec son extrémité d'introduction dans la forure (6) et vissée dans le béton,
**en ce que** la cartouche (17) est écrasée dans une zone (20) entre l'extrémité d'introduction (3) et le fond de forure (18),
**en ce que** les moyens d'étanchéité (19) sont comprimés dans la zone (20) et
**en ce que** les moyens d'étanchéité (19) mélangés à la poussière de forage présente dans la forure (6) sous pression circulent dans un canal étroit (21) présentant une largeur (g) de 0,4 mm à 0,7 mm entre le filet (5), le noyau (2) et la paroi de forure (6) et sont comprimés dans le béton.

2. Procédé selon la revendication 1, **caractérisé en ce que** le canal (21) est conçu avec une largeur (g) de préférence de 0,5 mm.

3. Procédé selon l'une des revendications 1 ou 2, **caractérisé en ce que**
un caoutchouc de silicone ou un liant de résine synthétique ou du verre soluble est utilisé comme moyens d'étanchéité (19).

4. Procédé selon l'une des revendications 1 à 3, **caractérisé en ce que**
la cartouche (17) est constituée d'un film.
